**Europäisches Patentamt**

**European Patent Office**

**Office européen des brevets**

(11) Veröffentlichungsnummer : **0 092 094**
**B1**

(12) **EUROPÄISCHE PATENTSCHRIFT**

(45) Veröffentlichungstag der Patentschrift :
**20.08.86**

(51) Int. Cl.⁴ : **G 01 N 27/90**

(21) Anmeldenummer : **83103286.7**

(22) Anmeldetag : **05.04.83**

(54) **Verfahren und Vorrichtung zur Prüfung von Werkstoffen nach dem Wirbelstromprinzip.**

(30) Priorität : **08.04.82 DE 3213267**

(43) Veröffentlichungstag der Anmeldung :
**26.10.83 Patentblatt 83/43**

(45) Bekanntmachung des Hinweises auf die Patenterteilung : **20.08.86 Patentblatt 86/34**

(84) Benannte Vertragsstaaten :
**FR IT SE**

(56) Entgegenhaltungen :
**EP-A- 0 068 503**
**DE-A- 2 937 865**
**DE-A- 3 029 936**
**GB-A- 2 010 492**
**US-A- 3 302 105**
**US-A- 3 895 290**
**US-A- 3 904 957**
**US-A- 4 061 968**
**MATERIALS EVALUATION, Januar 1975, V.S. CECCO et al. "Eddy current in-situ inspection of ferromagnetic monel tubes", Seiten 1-4**

(73) Patentinhaber : **Nukem GmbH**
**Rodenbacher Chaussee 6 Postfach 11 00 80**
**D-6450 Hanau 11 (DE)**

(72) Erfinder : **Hüschelrath, Gerhard, Dr. Ing.**
**Am Klinkergraben 7**
**D-8752 Laufach-Frohnhofen (DE)**
Erfinder : **Ruth, Ursula**
**Gartenstrasse 13**
**D-6451 Ronneburg (DE)**

(74) Vertreter : **Stoffregen, Hans-Herbert, Dr. Dipl.-Phys. et al**
**Patentanwälte Strasse & Stoffregen Salzstrasse 11a**
**Postfach 2144**
**D-6450 Hanau/Main 1 (DE)**

## Beschreibung

Die Erfindung bezieht sich auf ein Verfahren und eine Vorrichtung zur Prüfung von Werkstoffen auf Gefügefehler nach dem Wirbelstromprinzip mit einer relativ zu einem Prüfling bewegten Spule, mit der durch magnetische Wechselfelder im Prüfling Wirbelströme induziert werden, die in der Spule oder einer Fühlerspule ein sekundäres Feld hervorrufen, wobei die während eines Abtastzyklus am Ausgang der Spule oder Fühlerspule auftretenden Signale in eine Folge von digitalen, komplexen Zahlen umgewandelt werden, die nacheinander gespeichert werden.

Ein Verfahren der vorstehend beschriebenen Gattung ist bereits bekannt (GB-A-2 010 492). Mit dem bekannten Verfahren ·werden Fehler in Röhren an solchen Stellen festgestellt, an denen Teile von außen mit den Röhren verbunden sind. Für die zu prüfenden Stellen der Röhren werden mit einem fehlerfreien Bezugskörper Kurven der Meßwerte in der komplexen Ebene ermittelt und gespeichert. Von diesen Referenzkurven werden die bei der Messung von Prüflingen erhaltenen Kurven subtrahiert. Die erhaltenen Differenzkurven werden auf für Fehler typische Formen untersucht und ausgewertet.

Bei der Prüfung von Werkstoffen nach dem Wirbelstromverfahren treten häufig Störeffekte auf, die größere Signalpegel erzeugen als die im Werkstoff vorhandenen Fehler. Derartige Störeffekte werden durch das Abheben der Spule vom Prüfling, durch ferritische Einflüsse im Werkstoff usw. hervorgerufen. Um die Fehler erkennen zu können, müssen diese Störersignale von den durch die Fehler im Werkstoff verursachten Signale getrennt werden. Zur Trennung können die Amplituden und die Phasenlagen der komplexen Meßwerte herangezogen werden. Vielfach ist jedoch keine eindeutige Zuordnung der Fehler- und Störersignale zu bestimmten Amplituden- und Phasenbereichen möglich.

Bekannt ist auch eine Vorrichtung zur Prüfung von Werkstoffen auf Gefügefehler nach dem Wirbelstromprinzip, mit der Fehlersignale von Störersignalen unterschieden werden können. Die bekannte Vorrichtung enthält eine gegenüber einem Prüfling bewegte Spule, mit der durch magnetische Wechselfelder im Prüfling Wirbelströme induziert werden, die in einer Fühlerspule ein sekundäres Feld hervorrufen. Die Fühlerspule besteht aus zwei in Differentialschaltung angeordneten Spulenhälften. Die Ausgangssignale der Fühlerspule werden einer Phasenauswahlschaltung zugeführt, die zwei Gleichstromsignale erzeugt, die jeweils der Sinus- und Cosinuskomponente des Ausgangssignals der Fühlerspule proportional sind. Die Sinus- und Cosinuskomponente wird in je einen Analogspeicher eingegeben, der den Maximalwert speichert. Die Maximalwerte werden mit Referenzwerten verglichen. Es wird das Verhältnis der Maximalwerte gebildet und mit einem vorgegebenen Winkelwert verglichen. Wenn das Verhältnis größer als der Winkelwert ist, liegt ein Signal vor, das einen Fehler anzeigt. Im umgekehrten Fall ist ein Störersignal vorhanden (US-A-3 904 957).

Bei Mehrfrequenzprüfgeräten werden lineare Algorithmen angewendet, um die Fehler- von den Störersignalen zu unterscheiden. Es werden dabei stationäre, unabhängige Meßwerte bei unterschiedlichen Meßfrequenzen durch Matrixoperationen miteinander verknüpft, um Nullstellen in zu unterdrückenden Störerrichtungen zu erzeugen. Fehlersignale werden nur dann angezeigt, wenn sie der Phase nach in andere Bereiche fallen und zwar mit umso größerer Amplitude, je größer die Phasenwinkel in Bezug auf die Störerrichtung sind. Wenn die Fehlergröße nicht nur die Amplitude sondern auch die Phasenlage beeinflußt, ergeben sich hierdurch Verluste, die sich ungünstig auf die Fehlergrößenbestimmung auswirken. Diese Verluste treten unabhängig davon auf, ob ein Störersignal mit einem Fehlersignal zusammentrifft oder nicht.

Der Erfindung liegt die Aufgabe zugrunde, ein Verfahren der eingangs beschriebenen Gattung sowie eine Vorrichtung zur Durchführung dieses Verfahrens derart weiterzuentwickeln, daß die Erfassung von Störersignalen in einem gesonderten Schritt unter gleichzeitiger Speicherung der im jeweiligen Prüfzyklus erzeugten komplexen Zahlen erfolgt, die in Abhängigkeit von der Feststellung von Störersignalen anschließend mit oder ohne Kompensation des Einflusses der Störersignale weiterverarbeitet werden.

Die Aufgabe wird hinsichtlich des Verfahrens erfindungsgemäß dadurch gelöst, daß die einzelnen komplexen Zahlen in Abhängigkeit von ihrer Reihenfolge daraufhin geprüft werden, ob sie innerhalb prüfobjektbezogener Grenzen in Bereichen liegen, die von den komplexen Zahlen einer Folge nur im Falle von Störersignalen, im Falle von Störersignalen in Verbindung mit Fehlersignalen oder nur im Falle von Fehlersignalen durchlaufen werden, und daß die komplexen Zahlen bei Fehlersignalen in Verbindung mit Störersignalen nach einer Störersignalunterdrückung und bei Fehlersignalen ohne Verbindung mit Störersignalen unmittelbar zur Bestimmung der Fehlerart und danach zur Bestimmung der Fehlergröße ausgewertet werden.

Wenn keine Störersignale auftreten, läßt sich bei diesem Verfahren die bei einem Wirbelstromgerät vorhandene Meßempfindlichkeit voll für die Feststellung der Art und Größe von Materialfehlern ausnutzen. Wenn Störersignale zusammen mit Fehlersignalen festgestellt werden, kann der Einfluß des Störers unterdrückt werden. Die Art und Größe von Materialfehlern wird nach der Unterdrückung des Störersignals mit geringerer Meßempfindlichkeit erfaßt. Es hat sich gezeigt, daß die Prüfung der komplexen Zahlen hinsichtlich ihrer Lage in den vorgegebenen Bereichen und hinsichtlich der Reihenfolge des Übergangs in andere Bereiche zur Beurteilung ausgenutzt werden kann, ob nur ein Störersignal oder nur ein Fehlersignal oder ein Störersignal in Verbindung mit einem Fehlersignal vorliegt.

Bei einer bevorzugten Ausführungsform ist vorgesehen, daß beim Übergang der komplexen Zahlen der Folge von einem Bereich, der nur Fehlersignalen zugeordnet ist, in einen Bereich, der sowohl Störer- als auch Fehlersignalen zugeordnet ist, und beim Übergang der komplexen Zahlen, von dem Bereich, der sowohl Störer- als auch Fehlersignalen zugeordnet ist, in den Bereich, der nur Störersignalen zugeordnet ist, eine Fehlermeldung erzeugt wird.

Die Lage aufeinanderfolgender komplexer Zahlen in den verschiedenen Bereichen wird hierbei als Kriterium ausgenutzt, um auf einfache Weise das Vorhandensein von Materialfehlern festzustellen.

Vorzugsweise wird mit etwa zehn bis fünfzehn komplexen Zahlen die Lage und Reihenfolge in den Bereichen geprüft, wobei diese komplexen Zahlen zugleich für die nachfolgende Auswertung gespeichert werden. Diese Anzahl von Zahlen reicht für die Entscheidung über Störer- und Fehlersignale und für die spätere Verarbeitung hinsichtlich Art und Größe des Fehlers aus.

Bei einer zweckmäßigen Ausführungsform ist vorgesehen, daß komplexe Zahlen, die innerhalb der Grenze einer Basisschwelle liegen, in deren Mitte ein Bereichsmittelpunkt ist, von der Auswertung ausgeschlossen werden.

Die Größe der Basisschwelle richtet sich nach der Meßempfindlichkeit und nach der Größe der verarbeiteten Signale.

Die Aufgabe wird hinsichtlich der Vorrichtung zur Durchführung der oben beschriebenen Verfahren erfindungsgemäß dadurch gelöst, daß ein Wirbelstromprüfgerät über einen Datenkanal mit einem FIFO-Speicher und mit weiteren Speichern verbunden ist, in denen unter Adressen, die den komplexen Zahlen entsprechen, Angaben über die Zugehörigkeit der jeweiligen komplexen Zahl zu je einem vorgegebenen Bereich enthalten sind, die von den komplexen Zahlen nur im Falle von Störersignalen, im Falle von Störersignalen in Verbindung mit Fehlersignalen oder nur im Falle von Fehlersignalen durchlaufen werden, daß den weiteren Speichern erste bzw. zweite Register zur Speicherung der bei jeweils benachbarten komplexen Zahlen auftretenden Speicherausgangssignale nachgeschaltet sind, die von einem Komparator auf Bereichsübergänge geprüft werden, daß den weiteren Speichern ein drittes Register und Verknüpfungsglieder zur Feststellung der von den komplexen Zahlen durchlaufenen Bereiche, durch Prüfung der Reihenfolge dieser Zahlen, nachgeschaltet sind, und daß die Ausgangssignale des Komparators und der Verknüpfungsglieder an einen Mikrorechner gelegt sind, durch den die Ansteuerung von Speichern für die Zuordnung der komplexen Zahlen zu für sie typischen Fehlerarten und eines Speichers für die Zuordnung der komplexen Zahlen zu für sie typischen Fehlertiefen sowie eines Ausgabekanals für Markier- und Sortiervorrichtungen steuerbar ist.

Mit dieser Vorrichtung läßt sich innerhalb kurzer Zeit feststellen, ob ein Fehler vorliegt und welcher Art der Fehler ist. Daher können bereits während der Prüfung Vorkehrungen für die Stellung einer Sortierweiche getroffen werden.

Zweckmäßige Ausgestaltungen und Weiterbildungen der erfindungsgemäßen Vorrichtung sind den Ansprüchen 6 bis 12 zu entnehmen.

Weitere Einzelheiten, Vorteile und Merkmale der Erfindung sind im folgenden anhand eines in einer Zeichnung dargestellten Ausführungsbeispiels näher erläutert.

Es zeigen:

Figur 1 in einem kartesischen Koordinatensystem typische Bereiche für die Lage der komplexen Zahlen von Störer- und Fehlersignalen,

Figur 2 in einem kartesischen Koordinatensystem eine Einteilung von Bereichen, die den komplexen Zahlen von Störer- und Fehlersignalen zugeordnet sind, und

Figur 3 ein Übersichtsschaltbild einer Vorrichtung zur Prüfung von Werkstoffen nach dem Wirbelstromprinzip.

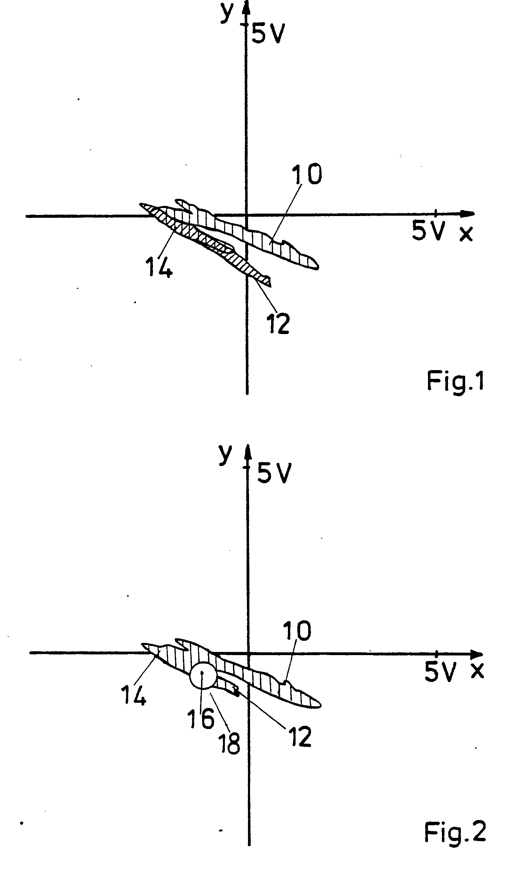

Bei der Werkstoffprüfung nach dem Wirbelstromprinzip erzeugt eine relativ zu einem Prüfling bewegte, nicht dargestellte Spule in einem Prüfling magnetische Wechselfelder beispielsweise mit unterschiedlichen Frequenzen. Die Wechselfelder induzieren Wirbelströme, die in einer Fühlerspule oder in der auf Empfang geschalteten Spule ein sekundäres Feld hervorrufen. Die Ausgangssignale der Spule bzw. Fühlerspule können in ihre Real- und Imaginäranteile zerlegt werden, die in digitale Werte umgewandelt werden. Dabei ergeben sich bei einer konstanten Relativbewegung zwischen Prüfling und Spule je Meßzyklus eine Reihe von Meßwerten in Form von komplexen Zahlen, die in einem kartesischen Koordinatensystem dargestellt werden können, in dessen Abszissenrichtung beispielsweise die Realanteile der Meßwerte aufgetragen sind, während die Ordinatenrichtung den Imaginäranteilen zugeordnet ist. Bei dem in Fig. 1 gezeigten kartesischen Koordinatensystem sind der Abszisse und der Ordinate die vorstehend beschriebenen Bedeutungen zugeordnet.

Für ein bestimmtes Prüfobjekt aus einem gegebenen Material werden zunächst in mehreren Prüfdurchläufen die für das Objekt typischen Fehlersignale und Störersignale erfaßt.

Bei derartigen Messungen hat sich gezeigt, daß die komplexen Zahlen der Fehler- und Störersignale in verschiedenen Bereichen liegen. In Fig. 1 ist der Bereich der Störersignale mit 10 und der Bereich der Fehlersignale mit 12 bezeichnet. Anhand der Bereiche 10 und 12 ist festzustellen, daß zwischen den komplexen Zahlen der Störer- und Meßsignale sowohl Unterschiede als auch Überschneidungen vorkommen. Insbesondere bei kleinen Fehlern können die entsprechenden komplexen Zahlen ganz in den Überschneidungsbereich der Störer- und Fehlersignale fallen. Dieser Überschneidungsbereich ist in Fig. 1 mit 14 bezeichnet. Die Bereiche 10, 12 und 14 werden im folgenden auch als Merkmale 10, 12 und 14 bezeichnet.

Die während eines Prüfzyklus entstehenden komplexen Zahlen hängen von der verwendeten Frequenz der Abtastung und von der Prüfgeschwindigkeit ab. Ein einem bestimmten Störeffekt zugeordnetes Störersignal durchläuft bestimmte Werte innerhalb des Bereichs 10. Nur wenn das entsprechende Signal mit einer vorgegebenen Anzahl von komplexen Zahlen bestimmte Bereiche 10, 12 und 14 durchlaufen hat, ist eine eindeutige Zuordnung zu einem bestimmten Signaltyp möglich. Allerdings ist die zeitliche Reihenfolge des Übergangs zwischen den Bereichen 10, 12 und 14 von Bedeutung für einen bestimmten Signaltyp. Wenn sich die Reihenfolge ändert, dann ist dies kein Anzeichen für einen bestimmten Signaltyp sondern das Kennzeichen eines Fehlers im Werkstoff.

Die Feststellung der verschiedenen Signaltypen erfolgt anhand zahlreicher komplexer Zahlen. Etwa zehn bis fünfzehn komplexe Zahlen reichen zur Feststellung eines Störersignals aus. Diese Zahlen werden in Abhängigkeit von ihrer Reihenfolge daraufhin geprüft, ob sie innerhalb der für das jeweilige Prüfobjekt ermittelten Grenzen der Bereiche liegen, die nur von Störersignalen, von Störersignalen und Fehlersignalen oder nur von Fehlersignalen durchlaufen werden. Gleichzeitig werden die komplexen Zahlen des jeweiligen Zyklus gespeichert.

Bestimmte komplexe Zahlen sind nicht für eine Weiterverarbeitung bestimmt. Es handelt sich um solche Zahlen, die einem Bereichsnullpunkt 16 entsprechen oder dem Bereichsnullpunkt 16, der in Fig. 2 dargestellt ist, eng benachbart sind. Die Grenze, ab der komplexe Zahlen weiterverarbeitet werden, ist durch eine mit 18 bezeichnete Basisschwelle gegeben. Zahlen, die innerhalb dieser Basisschwelle 18 liegen, können keine sinnvoll verarbeitbaren Daten liefern. Tritt während des Meßzyklus ein Störersignal auf, dann liegen die ersten komplexen Zahlen, ausgehend von der Basisschwelle 18, in dem den Störersignalen zugeordnet Bereich 10, der auch von den weiteren komplexen Zahlen durchlaufen wird. Die Anzahl der komplexen Zahlen, die auf den Bereich 10 entfallen, hängt von der Taktrate, mit der die Meßwerte aus dem Ausgangssignal der Spule entnommen werden, von der Relativgeschwindigkeit zwischen Prüfobjekt und Spule und von dem Entstehungszeitpunkt der Störersignale innerhalb des vorgegebenen Abtastzyklus ab. Danach können von den komplexen Zahlen Kurven innerhalb des Bereichs 14 durchlaufen werden, bevor der Bereich 12 nach einem Durchlaufen des Nullbereiches erreicht wird. Ändert sich die Reihenfolge des Durchlaufs der Bereiche, dann ist dies ein Anzeichen dafür, daß ein besonderer Störersignaltyp nicht vorliegt. Während die komplexen Zahlen bei einem reinen Störersignal die Bereiche 10, 14 und 12 durchlaufen, können bei einem Fehlersignal ohne Störersignal komplexe Zahlen nur in den Bereichen 12 und 14 auftreten. Treten Störersignal und Fehlersignal gleichzeitig auf, so werden diese Bereichsgrenzen überschritten und damit wird automatisch auf Fehler entschieden. Nachdem die Lage und die Reihenfolge der während eines Abtastvorgangs erhaltenen komplexen Zahlen hinsichtlich der Bereiche 10, 12 und 14 geprüft ist, steht fest, ob nur ein Störersignal, ein Störersignal in Verbindung mit einem Fehlersignal oder nur ein Fehlersignal aufgetreten ist. In Abhängigkeit von diesen drei Möglichkeiten werden die bei einem Abtastvorgang erhaltenen und gespeicherten komplexen Zahlen auf verschiedene Weise weiterverarbeitet. Wenn nur ein Störersignal vorhanden ist, können die komplexen Zahlen gelöscht oder als solche registriert werden.

Ist ein Störersignal in Verbindung mit einem Fehlersignal festgestellt worden, so wird eine Störerunterdrückung durchgeführt. Anhand des Verlaufs der komplexen Zahlen läßt sich die Art des Störersignals ebenfalls erkennen. Daher ist es möglich, an die Storeffekte angepaßte Unterdrückungsmaßnahmen vorzusehen. Die vorhandenen komplexen Zahlen werden nach der für die Art der Störung typischen Methode umgeformt, so daß die neuen Werte nur noch den Fehlersignalteil enthalten. Vielfach tritt dabei allerdings eine Verminderung der Meßgenauigkeit ein.

Die Fehlersignale, bei denen keine Störersignale festgestellt wurden und die von Störersignalen befreiten Fehlersignale werden anschließend weiterverarbeitet. In einem ersten Schritt wird anhand des typischen Verlaufs der komplexen Zahlen innerhalb der Bereiche 12 und 14 die Fehlerart ermittelt. Vorzugsweise werden die komplexen Zahlen in folgende Fehlerklassen eingeteilt: Loch, Innenriß, Außenriß und undefinierbare Fehler. Undefinierbare Fehler werden nicht weiterverarbeitet, sondern dem Bedienungspersonal mit Angabe der Prüflingsnummer gemeldet.

Nach der Einteilung in Fehlerklassen folgt ein weiterer Schritt, in dem die während eines Prüfzyklus gewonnenen komplexen Zahlen verarbeitet werden. Dieser Schritt umfaßt die Bestimmung der Fehlertiefe. Es wird anhand des festgestellten Fehlertyps und der Anzeigengröße das Fehlertiefenmaß bestimmt. Der Zusammenhang zwischen Anzeigengröße und Fehlertiefenmaß ist vorgebbar und kann zur Bestimmung der jeweiligen Fehlertiefe aus einer gegebenen Anzeigengröße verwendet werden.

Die oben beschriebenen Verfahrensschritte nutzen zwar jeweils die bei einem Abtastvorgang erhaltenen komplexen Zahlen aus, verändern diese jedoch insofern nicht, als sie für einen nachfolgenden Verfahrensschritt erneut benötigt werden. In diesem nachfolgenden Verfahrensschritt kann, soweit erforderlich, auf die ursprünglich erzeugten komplexen Zahlen zurückgegriffen werden.

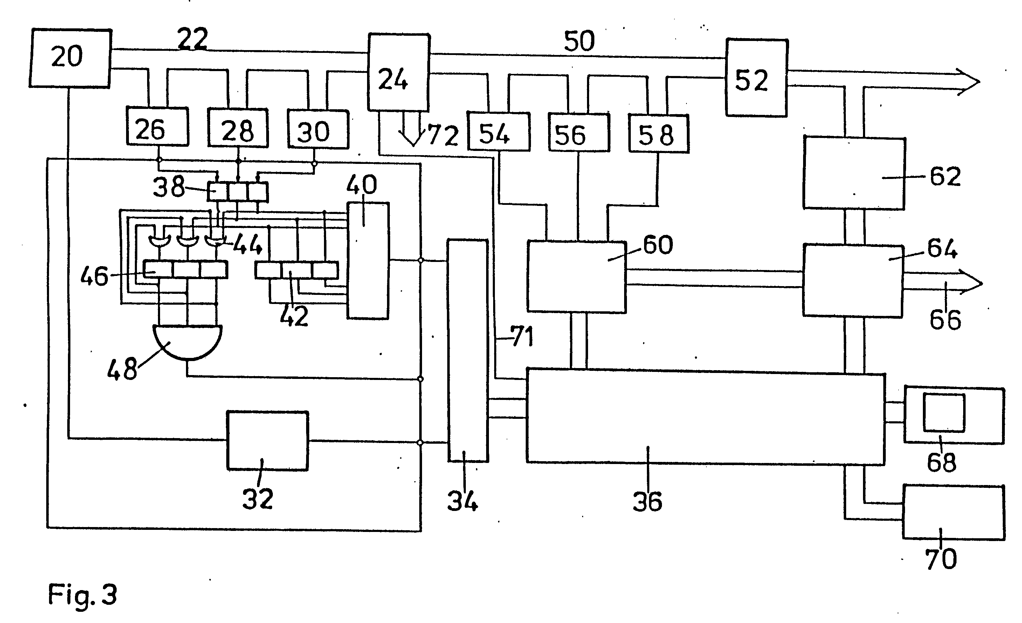

Bei der in Fig. 3 dargestellten Vorrichtung zur Durchführung des oben beschriebenen Verfahrens ist ein Wirbelstromprüfgerät 20 vorhanden, mit dem ein nicht dargestellter Prüfkörper, zum Beispiel ein Rohr, untersucht wird. Während eines Prüfzyklus gibt das Prüfgerät 20 auf einen Datenbus 22 digitale, komplexe Zahlen aus, die dem Ausgangssignal der nicht dargestellten Fühlerspule des Prüfgerätes 20 entsprechen.

Die komplexen Zahlen gelangen in einen RAM-Speicher 24, der nach dem FIFO-Prinzip arbeitet (First-In, First-Out).

Die auf dem Datenbus 22 anstehenden komplexen Zahlen bilden zugleich Adressen für drei weitere Speicher 26, 28, 30, die vorzugsweise als ROM-Speicher ausgebildet sind. Die drei Speicher 26, 28, 30 sind jeweils den Bereichen 10, 12 und 14 zugeordnet. Unter der jeweiligen Adresse ist in den Speichern 26, 28, 30 ein Bit gespeichert, das angibt, ob die die Adresse bildende komplexe Zahl in den jeweiligen Bereich fällt oder nicht. Hierdurch ist eine sehr schnelle Zuordnung der komplexen Zahlen zu den Bereichen möglich. Die Basisschwelle 18 gibt ein Maß dafür an, wieviele Stellen für den jeweiligen Bereich pro Adresse im Speicher 24 vorhanden sein müssen. Bei einem Datenformat des Datenbus 22 von zwölf Bit reichen die acht Bit mit den höheren Stellenwerten aus, um die Bereichswerte genau voneinander zu unterscheiden. Vielfach reichen bereits die sechs Bit mit den höheren Stellenwerten aus.

Das Prüfgerät 20 ist ferner mit dem Zähleingang eines Zählers 32 verbunden, der die Anzahl der komplexen Zahlen pro Abtastzyklus überwacht. Je nach der Art der möglichen Störersignale, der Abtastrate und der Prüfgeschwindigkeit wird der Zähler 32 auf einen entsprechenden Wert voreingestellt. Die Gesamtzahl der komplexen Zahlen kann auch als eine Art Codewort betrachtet werden, dessen Länge durch den Voreinstellwert des Zählers 32 bestimmt wird. Der Zähler 32 wird zum Beispiel bei jeder neuen komplexen Zahl im Inhalt um eins vermindert. Beim Zählinhalt Null gibt der Zähler 32 ein Signal an eine Eingabeschaltung 34 eines Mikrorechners 36 ab.

Die Ausgänge der Speicher 26, 28, 30 sind je mit einer Speicherstufe eines ersten Registers 38 verbunden. Die Ausgänge der Stufen des Registers 38 sind an Eingänge eines Komparators 40 und je an Eingänge von Speicherstufen eines zweiten Registers 42 angeschlossen, dessen Ausgänge an die zweiten des Komparators 40 gelegt sind. Der Komparator 40 vergleicht die an seinen Eingängen anstehenden Binärwerte auf Gleichheit und auf die Bedingung größer oder kleiner als der an einem bestimmten Eingang vorhandene Wert.

Das erste Register 38 ist über ODER-Verknüpfungsglieder 44 mit einem dritten Register 46 verbunden, dessen Ausgänge ebenfalls an Eingänge der ODER-Verknüpfungsglieder 44 gelegt sind. Weiterhin stehen die Ausgänge der Stufen des dritten Registers 46 über ein UND-Glied 48 mit der Eingabeschaltung 34 in Verbindung.

Bei positiver Entscheidung auf Störer wird der Datensatz im Speicher 24 über die Rücksetzleitung 71 gelöscht oder kann über einen Bus 71 registriert werden.

Die Ausgänge des Speichers 24 sind bei negativer Störerentscheidung dagegen über einen weiteren Datenkanal 50 an Eingänge eines zweiten FIFO-Speichers 52 und an Eingänge dreier weiterer Speicher 54, 56, 58 angeschlossen, bei denen es sich ebenfalls um ROM-Speicher handeln kann. Die Ausgangssignale des Speichers 24, bei denen es sich um die komplexen Zahlen handelt, dienen auch als Adressen für die Speicher 54, 56, 58 die eine Verknüpfung zwischen den komplexen Zahlen und für diese typischen Fehlerarten herstellen. Beispielsweise geben die Inhalte der Zellen des Speichers 54 die zu bestimmten Adressen gehörigen Werte für Löcher im Prüfkörper an. Die Speicher 56 und 58 beinhalten die für Innenrisse und Außenrisse typischen Merkmale.

Die Ausgänge der Speicher 54, 56, 58 sind je an eine zusätzliche Eingabeschaltung 60 des Mikrorechners 36 gelegt.

Die Ausgänge des Speichers 52 sind mit einem weiteren Speicher 62 verbunden, der für die Bestimmung der Fehlergröße vorgesehen ist. Wahlweise ist der Speicher 52 auch mit einer nicht dargestellten Anzeigevorrichtung verbunden. Die Ausgänge des Speichers 62 sind über eine Ein-, Ausgabeschaltung 64 mit dem Mikrorechner 36 verbunden. Die Ein-, Ausgabeschaltung 64 hat Ausgänge 66 zur Steuerung von Markier- und/oder Sortiervorrichtungen für die Prüflinge. An den Mikrorechner 36 kann weiterhin ein Bildschirmterminal 68 und ein Großraumspeicher 70 angeschlossen sein.

Die Register 38, 42 und 46 bestehen aus beispielsweise drei Speicherstufen (die Anzahl der Speicherstufen hängt von der Zahl der zur Signalbeschreibung notwendigen Bereichen ab), die je mit den drei Speichern 26, 28, 30 verbunden sind, die für drei Bereiche 10, 12 und 14 vorhanden sind.

Wenn während eines Meßzyklus am Ausgang des Prüfgerätes 20 eine komplexe Zahl auftritt, dann adressiert diese die Speicher 26, 28 und 30. Derjenige Speicher, in dessen Bereich die komplexe Zahl fällt, gibt eine Meldung an die nachgeschaltete Speicherstufe des Registers 38 ab. Das Register 38 kann nur jeweils eine durch einen Binärwert realisierte Meldung enthalten, wenn die Vorrichtung einwandfrei arbeitet.

Im Register 42 ist beispielsweise das Ergebnis der Prüfung der vorausgegangenen komplexen Zahl gespeichert. Der Komparator 40 stellt nun fest, ob die Inhalte der Register 38, 40 gleich sind oder ob der Inhalt des Registers 38 größer oder kleiner als der Inhalt des Registers 42 ist. Unter der Annahme, daß dem Ausgang des Speichers 26 die Stelle mit dem niedrigsten Stellenwert zugeordnet ist, ist das Komparatorausgangssignal, das feststellt, daß der Inhalt des Registers 42 kleiner als derjenige des Registers 38 ist, ein Fehlersignal.

Fällt ein Meßsignal in keine der durch die Speicher 26, 28 und 30 definierten Bereiche, so tritt im Register 38 der Wert Null auf. Dies führt über den Komparator 40 zu der Entscheidung, daß ein Fehlersignal vorliegt.

Durch die Verknüpfungsglieder 44 werden die Inhalte der Register 38 und 46 in ODER-Verknüpfung miteinander verbunden. Das Ergebnis wird wiederum im Register 46 abgespeichert. Aufgrund dieser ODER-Verknüpfung sind mit dem Ende des Meßzyklus im Register 46 alle Stellen mit den gleichen binären Werten besetzt, wenn von den komplexen Zahlen alle Bereiche 10, 12, 14 durchlaufen wurden. Dies ist ein Kriterium dafür, daß ein Störersignal zusammen mit einem Fehlersignal im Verlauf der komplexen Zahlen enthalten ist. Auf dieses Kriterium hin gibt der Mikrorechner 36 den Inhalt des Speichers 24 für die weitere Verarbeitung frei, die in der Störersignalunterdrückung mit anschließender Fehlerklassifizierung über die Speicher 54, 56, 58 besteht. Nach der Fehlerklassifizierung wird anhand der komplexen Zahlen über den Speicher 62 die Fehlertiefe bestimmt.

Wenn die Zahl der Bereiche größer als drei ist, müssen entsprechend mehr Speicher und Registerstufen vorhanden sein. Die Größe der Speicher 24 und 52 ist an die Anzahl der pro Meßzyklus anfallenden komplexen Zahlen anzupassen. Für die Datenbreite der Zahlen im Speicher 52 gelten im übrigen die oben in Verbindung mit dem Speicher 24 getroffenen Feststellungen.

Die Anzahl der mit der Eingabeschaltung 60 verbundenen Speicher entspricht der Zahl der Fehlerarten.

Der Zähler 32 zeigt dem Rechner 36 das Ende des Meßzyklus an. Der Mikrorechner 36 veranlaßt dann unter Verarbeitung des Ausgangssignals des Komparators 40 die Verwendung der im Speicher 24 enthaltenen Meßwerte für die Fehlerklassifizierung und die gleichzeitige Abspeicherung im Speicher 52. Bei vorliegendem Störersignal wird die Information im FIFO-Speicher 24 über die Rücksetzleitung 71 gelöscht oder falls eine Speicherung aller Störerdaten gewünscht wird, über einen gesonderten Datenbus 72 zur Registrierung bereitgestellt. Danach steuert der Mikrorechner 36 die Ermittlung der Fehlertiefe anhand der jeweils klassifizierten Fehler.

Die in Fig. 3 dargestellte Anordnung ermöglicht die Verarbeitung einer einzelnen komplexen Zahl in etwa 10 µs. Damit ist die Verarbeitungszeit wesentlich kleiner als die Meßtorzeiten der einzelnen Meßfrequenzen. Bei einem Prüfgerät 20, das im 1kHz-Raster mehrere Frequenzen erzeugt, bedeutet dies, daß für fünfzehn Meßwerte etwa 15 ms benötigt werden. Wenn die Verarbeitung dieser Meßwerte im vorgegebenen Systemtakt erfolgt, dann tritt diese Zeit bei jedem der oben beschriebenen Verfahrensschritte auf. Das Ergebnis der Verarbeitung steht demnach mit einer Verzögerung von etwa 50 ms zur Verfügung. Diese Zeit ist so kurz, daß auch bei einem am Prüfkörperende festgestellten Fehler für die Ansteuerung einer Markier- oder Sortiervorrichtung ausreichend Zeit bleibt.

## Patentansprüche

1. Verfahren zur Prüfung von Werkstoffen auf Gefügefehler nach dem Wirbelstromprinzip mit einer relativ zu einem Prüfling bewegten Spule, mit der durch magnetische Wechselfelder im Prüfling Wirbelströme induziert werden, die in der Spule oder einer Fühlerspule ein sekundäres Feld hervorrufen, wobei die während eines Abtastzyklus am Ausgang der Spule oder Fühlerspule auftretenden Signale in eine Folge von digitalen, komplexen Zahlen umgewandelt werden, die nacheinander gespeichert werden, dadurch gekennzeichnet, daß die einzelnen komplexen Zahlen in Abhängigkeit von ihrer Reihenfolge daraufhin geprüft werden, ob sie innerhalb prüfobjektbezogener Grenzen in Bereichen (10, 12, 14) liegen, die von den komplexen Zahlen einer Folge nur im Falle von Störersignalen, im Falle von Störersignalen in Verbindung mit Fehlersignalen oder nur im Falle von Fehlersignalen durchlaufen werden, und daß die komplexen Zahlen bei Fehlersignalen in Verbindung mit Störersignalen nach einer Störersignalunterdrückung und bei Fehlersignalen ohne Verbindung mit Störersignalen unmittelbar zur Bestimmung der Fehlerart und danach zur Bestimmung der Fehlergröße ausgewertet werden.

2. Verfahren nach Anspruch 1, dadurch gekennzeichnet, daß beim Übergang der komplexen Zahlen der Folge von einem Bereich (12) der nur Fehlersignalen zugeordnet ist, in einen Bereich (14), der sowohl Störer- als auch Fehlersignalen zugeordnet ist, und beim Übergang der komplexen Zahlen, von dem Bereich (14), der sowohl Störer- als auch Fehlersignalen zugeordnet ist, in den Bereich (10), der nur Störersignalen zugeordnet ist, eine Fehlermeldung erzeugt wird.

3. Verfahren nach Anspruch 1 oder 2, dadurch gekennzeichnet, daß mit etwa zehn bis fünfzehn komplexen Zahlen die Lage und Reihenfolge in den Bereichen (10, 12, 14) geprüft, und diese komplexen Zahlen zugleich für die nachfolgende weitere Auswertung gespeichert werden.

4. Verfahren nach Anspruch 1 oder einem der folgenden Ansprüche, dadurch gekennzeichnet, daß komplexe Zahlen, die innerhalb der Grenze einer Basisschwelle (18) liegen, in deren Mitte ein Bereichsnullpunkt (16) ist, von der Auswertung ausgeschlossen werden.

5. Vorrichtung zur Prüfung von Werkstoffen auf Gefügefehler nach dem Wirbelstromprinzip mit einer relativ zu einem Prüfling bewegten Spule, mit der durch magnetische Wechselfelder im Prüfling Wirbelströme induziert werden, die in der Spule oder einer Fühlerspule ein sekundäres Feld hervorrufen, wobei die Während eines Abtastzyklus am Ausgang der Spule oder Fühlerspule auftretenden Signale in eine Folge von digitalen, komplexen Zahlen umgewandelt werden, die nacheinander gespeichert werden, zur Durchführung des Verfahrens des Anspruchs 1 oder einem der folgenden Ansprüche, dadurch gekennzeichnet, daß ein Wirbelstromprüfgerät (20) über einen Datenkanal (22) mit einem FIFO-Speicher (24) und mit weiteren Speichern (26, 28, 30) verbunden ist, in denen unter Adressen, die den komplexen Zahlen entsprechen, Angaben über die Zugehörigkeit der jeweiligen komplexen Zahl zu je einem vorgegebenen Bereich (10, 12, 14) enthalten sind, die von den komplexen Zahlen nur im Falle von Störersignalen, im Falle von Störersignalen in Verbindung mit Fehlersignalen oder nur im Falle von Fehlersignalen durchlaufen werden, daß den weiteren Speichern (26, 28, 30) erste bzw. zweite Register (38 bzw. 42) zur Speicherung der bei jeweils benachbarten komplexen Zahlen auftretenden Speicherausgangssignale nachgeschaltet sind, die von einem Komparator (40) auf Bereichsübergänge geprüft werden, daß den weiteren Speichern (26, 28, 30) ein drittes Register (46) und Verknüpfungsglieder (44, 48) zur Feststellung der von den komplexen Zahlen durchlaufenen Bereiche durch Prüfung der Reihenfolge dieser Zahlen nachgeschaltet sind, und daß die Ausgangssignale des Komparators (40) und der Verknüpfungsglieder (48) an einen Mikrorechner (36) gelegt sind, durch den die Ansteuerung von Speichern (54, 56, 58) für die Zuordnung der komplexen Zahlen zu für sie typischen Fehlerarten und eines Speichers (62) für die Zuordnung der komplexen Zahlen zu für sie typischen Fehlertiefen sowie eines Ausgabekanals (66) für Markier- und Sortiervorrichtungen steuerbar ist.

6. Vorrichtung nach Anspruch 5, dadurch gekennzeichnet, daß je Bereich (10, 12, 14) ein eigener Speicher (26, 28, 30) vorgesehen ist.

7. Vorrichtung nach Anspruch 6, dadurch gekennzeichnet, daß die Register (38, 42, 46) je drei Speicherstufen aufweisen.

8. Vorrichtung nach Anspruch 5 oder einem der folgenden Ansprüche, dadurch gekennzeichnet, daß die Ausgänge der Speicher (26, 28, 30) ein erstes Register (38) speisen, dessen Ausgänge unmittelbar und über ein zweites Register (42) an die Eingänge des Komparators (40) angeschlossen sind.

9. Vorrichtung nach Anspruch 5 oder einem der folgenden Ansprüche, dadurch gekennzeichnet, daß das erste Register (38) über ODER-Verknüpfungsglieder (44) mit dem dritten Register (46) verbunden ist, dessen Ausgänge an die zweiten Eingänge der ODER-Verknüpfungsglieder gelegt sind.

10. Vorrichtung nach Anspruch 5 oder einem der folgenden Ansprüche, dadurch gekennzeichnet, daß die Ausgänge des dritten Registers (46) über ein UND-Glied (48) mit dem Mikrorechner (36) verbunden sind.

11. Vorrichtung nach Anspruch 5 oder einem der folgenden Ansprüche, dadurch gekennzeichnet, daß das Wirbelstromprüfgerät (20) über einen Ausgang mit einem auf die Anzahl der Meßwerte pro Meßzyklus eingestellten Zähler (32) verbunden ist, dessen Ausgang an den Mikrorechner (36) angeschlossen ist.

12. Vorrichtung nach Anspruch 5 oder einem der folgenden Ansprüche, dadurch gekennzeichnet, daß ein zweiter FIFO-Speicher (52) zwischen einem vom ersten FIFO-Speicher (24) gespeisten Datenkanal (50) und dem Speicher (62) für die Fehlertiefenfeststellung angeordnet ist.

**Claims**

1. A method for detecting structural flaws in materials using the eddy current principle in which a test coil is moved relative to a workpiece. The test coil produces alternating magnetic fields which induce eddy currents in the workpiece, in turn generating a secondary field in the test coil or in a sensor coil, whereby the signals emitted during a scanning cycle at the output port of the test coil or sensor coil are converted into a series of digital complex numbers which are stored consecutively, wherein the individual complex numbers are checked, depending on their order, as to whether they lie within workpiece-related limits in ranges (10, 12, 14) which are passed through by the complex numbers of a series in the case of interference signals alone, in the case of interference signals in conjunction with flaw signals, or in the case of flaw signals alone, and wherein the complex numbers are directly evaluated to determine the type of flaw and then to determine the size of the flaw in the case of flaw signals in conjunction with interference signals after interference signal suppression, and in the case of flaw signals alone.

2. A method according to claim 1 wherein a flaw signal is generated when the complex numbers in the series pass from a range (12) to which only flaw signals are allocated, into a range (14), to which both interference and flaw signals are allocated, and when the complex numbers pass from the range (14), to which both interference and flaw signals are allocated, into the range (10), to which only interference signals are allocated.

3. A method according to claim 1 or 2 wherein the position and order in ranges (10, 12, 14) can be tested with roughly 10 to 15 complex numbers, and wherein these complex numbers are stored simultaneously for the subsequent evaluation.

4. A method according to claim 1 or one of the following claims wherein the complex numbers lying within the limits for a basic threshold (18), in the middle of which is a range zero point (16), are excluded from the evaluation.

5. A test apparatus for detecting structural flaws in materials using the eddy current principle in which a test coil is moved relative to a workpiece. The test coil produces alternating magnetic fields which induce eddy currents in the workpiece, in turn generating a secondary field in the test coil or in a sensor coil, whereby the signals emitted during a scanning cycle at the output port of the test coil or the sensor coil are converted into a series of digital complex numbers which are stored consecutively, wherein an eddy current test apparatus (20) is interfaced via a data channel (22) to a FIFO memory (24) and further memories (26, 28, 30), in which information on the allocation of the particular complex number to a specified range (10, 12, 14) is stored under addresses corresponding to the complex numbers, which are passed through by the complex numbers only in the case of interference signals in conjunction with flaw signals or in the case of flaw signals alone, and wherein first or second registers (38 or 42) for storing the memory output signals from adjacent complex numbers are interfaced to the other memories (26, 28, 30) and which are checked for range transition by a comparator (40), and wherein a third register (46) and logic elements (44, 48) are interfaced to the other memories (26, 28, 30) in order to determine the ranges passed through by the complex numbers by checking the order of these numbers, and wherein the output signals from the comparator (40) and the logic elements (48) are transferred to a microcomputer (36) via which the driving of memories (54, 56, 58) for the allocation of the complex numbers to type-typical flaw types and of a memory (62) for allocation of the complex numbers to type-typical flaw depths and of an output channel (66) for marker and sorter instruments can be controlled.

6. Test instrument according to claim 5 wherein a separate memory (26, 28, 30) is allocated to each range (10, 12, 14).

7. Test instrument according to claim 6 wherein the registers (38, 42, 46) each have three memory stages.

8. Test instrument according to claim 5 or one of the following claims wherein the output ports of memories (26, 28, 30) feed a first register (38), the output ports of which are interfaced directly and via a second register (42) to the input ports or the comparator (40).

9. Test instrument according to claim 5 or one of the following claims wherein the first register (38) is connected via OR logic elements (44) to the third register (46), the output ports of which are connected to the second input ports of the OR logic elements.

10. Test instrument according to claim 5 or one of the following claims wherein the output ports of the third register (46) are connected to the microcomputer (36) via an AND logic element (48).

11. Test instrument according to claim 5 or one of the following claims wherein the eddy current test apparatus (20) is interfaced via an output port to a meter (32) set to the number of measured values per measuring cycle, the output port of which is connected to the microcomputer (36).

12. Test instrument according to claim 5 or one of the following claims wherein a second FIFO memory (52) is interfaced between a data channel (50) fed by the first FIFO memory (24) and the memory (62) for determining the flaw depth.

## Revendications

1. Procédé pour le contrôle des défauts de structure de matériaux, selon le principe des courants de Foucault, avec une bobine se déplaçant par rapport à une pièce à contrôler, avec laquelle sont induits dans la pièce à contrôler, par des champs magnétiques alternatifs, des courants de Foucault qui engendrent un champ secondaire dans la bobine ou dans une bobine de palpeur, les signaux qui apparaissent à la sortie de la bobine ou de la bobine de palpeur au cours d'un cycle de balayage étant convertis en une série de nombres digitaux complexes qui sont mis en mémoire l'un après l'autre, caractérisé en ce que les nombres complexes individuels sont ensuite contrôlés, en fonction de leur succession, pour déterminer s'ils se situent à l'intérieur de limites, établies par rapport à la pièce à contrôler, dans des zones (10, 12, 14) qui ne sont traversées par les nombres complexes d'une série que dans le cas de signaux parasites, dans le cas de signaux parasites en liaison avec des signaux de défaut, ou seulement dans le cas de signaux de défaut, et que dans le cas de signaux de défaut en liaison avec des signaux parasites, après une suppression des signaux parasites et dans le cas de signaux de défaut sans liaison avec des signaux parasites, les nombres complexes sont évalués immédiatement pour la détermination de la nature du défaut et, ensuite, pour la détermination de la taille du défaut.

2. Procédé selon la revendication 1, caractérisé en ce qu'il y a une production d'un message de défaut dans le cas du passage des nombres complexes de la série, d'une zone (12) qui est affectée seulement aux signaux de défaut, dans une zone (14) qui est affectée tant aux signaux parasites qu'aux signaux de défaut, et dans le cas du passage des nombres complexes de la zone (14), qui est affectée tant aux signaux parasites qu'aux signaux de défaut, dans la zone (10) qui est affectée seulement aux signaux parasites.

3. Procédé selon l'une quelconque des revendications 1 et 2, caractérisé en ce que la position et la succession sont contrôlées dans les zones (10, 12, 14) avec environ 10 à 15 nombres complexes, et ces nombres complexes sont mis en mémoire pour la nouvelle évaluation subséquente.

4. Procédé selon la revendication 1 ou l'une quelconque des revendications suivantes, caractérisée en ce que les nombres complexes qui se situent à l'intérieur de la limite d'un seuil de base (18), au centre duquel se trouve un point zéro de zone (16), sont exclus de l'évaluation.

5. Dispositif pour le contrôle des défauts de structure de matériaux, selon le principe des courants de Foucault, avec une bobine se déplaçant par rapport à une pièce à contrôler, avec laquelle sont induits dans la pièce à contrôler, par des champs magnétiques alternatifs, des courants de Foucault qui engendrent un champ secondaire dans la bobine ou dans une bobine de palpeur, les signaux qui apparaissent à la sortie de la bobine ou de la bobine de palpeur au cours d'un cycle de balayage étant convertis en une série de nombres digitaux complexes qui sont mis en mémoire l'un après l'autre, pour la mise en oeuvre du procédé de la revendication 1 ou de l'une quelconque des revendications suivantes, caractérisé en ce qu'un appareil de contrôle à courants de Foucault (20) est relié par l'intermédiaire d'un canal de données (22) à un dispositif de mémoire de type première entrée première sortie (24) et à d'autres dispositifs de mémoire (26, 28, 30), dans lesquels sont contenues, sous des adresses qui correspondent aux nombres complexes, des données sur l'appartenance de chaque nombre complexe chacun à une zone pré-établie (10, 12, 14) qui ne sont traversées par les nombres complexes que dans le cas de signaux parasites, dans le cas de signaux parasites en relation avec des signaux de défaut, ou seulement dans le cas de signaux de défaut, que des premiers ou, respectivement, des seconds enregistreurs (38 et respectivement 42) sont connectés aux autres dispositifs de mémoire (26, 28, 30) pour la mise en mémoire des signaux de sortie des dispositifs de mémoire apparaissent pour les nombres complexes voisins respectifs, qui sont contrôlés par un comparateur (40) en ce qui concerne le passage de zone, en ce qu'un troisième enregistreur (46) et des éléments de logique (44, 48) sont connectés à la suite aux autres dispositifs de mémoire (26, 28, 30) pour l'établissement des zones traversées par les nombres complexes, au moyen du contrôle de la succession de ces nombres, et que les signaux de sortie du comparateur (40) et de l'élément logique (48) sont introduits sur un micro-ordinateur (36) grâce auquel est possible la commande des dispositifs de mémoire (54, 56, 58) pour l'affectation des nombres complexes aux types de défauts qui leur sont caractéristiques, et d'un dispositif de mémoire (62) pour l'affectation des nombres complexes aux profondeurs des défauts qui leur sont caractéristiques, ainsi que d'un canal de sortie (66) pour des dispositifs de marquage et de triage.

6. Dispositif selon la revendication 5, caractérisé en ce qu'un dispositif de mémoire propre (26, 28, 30) est prévu pour chaque zone (10, 12, 14).

7. Dispositif selon la revendication 6, caractérisé en ce que les enregistreurs (38, 42, 46) présentent chacun trois échelons de mémoire.

8. Dispositif selon la revendication 5 ou l'une quelconque des revendications suivantes, caractérisé en ce que les sorties des dispositifs de mémoire (26, 28, 30) alimentent un premier enregistreur (38) dont les sorties sont connectées directement et par l'intermédiaire d'un second enregistreur (42) aux entrées du comparateur (40).

9. Dispositif selon la revendication 5 ou l'une quelconque des revendications suivantes, caractérisé en ce que le premier enregistreur (38) est relié, par l'intermédiaire d'éléments logiques OU (44), au troisième enregistreur (46), dont les sorties sont reliées aux deuxièmes entrées des éléments logiques OU.

10. Dispositif selon la revendication 5 ou l'une quelconque des revendications suivantes, caractérisé en ce que les sorties du troisième enregistreur (46) sont reliées au micro-ordinateur (36) par l'intermédiaire d'un élément ET (48).

11. Dispositif selon la revendication 5 ou l'une quelconque des revendications suivantes, caractérisé en ce que l'appareil de contrôle par courants de Foucault (20) est relié par une sortie à un compteur (32) réglé sur le nombre des valeurs mesurées par cycle de mesure, dont la sortie est connectée au micro-ordinateur (36).

12. Dispositif selon la revendication 5 ou l'une quelconque des revendications suivantes, caractérisé en ce qu'un deuxième dispositif de mémoire de type première entrée première sortie (52) est disposé entre un canal de données (50) alimenté par le premier dispositif de mémoire de type première entrée première sortie (24), et le dispositif de mémoire (62) pour la détermination de la profondeur des défauts.

Fig.1

Fig.2

1

Fig. 3

0 092 094